# EUROPEAN PATENT APPLICATION

(11) **EP 4 783 314 A1**
(43) Date of publication of application: **29.07.2026**
(21) Application number: 24868026.6
(22) Date of filing: 23.08.2024
(51) Int. Cl.: H01M 50/169, B23K 26/21, B23K 26/073, H01G 11/78, H01G 11/84, H01M 6/02, H01M 10/04, H01M 10/058, H01M 50/15, H01M 50/103, H01M 50/107, H01M 50/152

(54) **METHOD FOR MANUFACTURING ENERGY STORAGE DEVICE, AND ENERGY STORAGE DEVICE**

(30) Priority: 20.09.2023 JP 2023152366
(71) Applicant: Panasonic Intellectual Property Management Co., Ltd., Kadoma-shi, Osaka 571-0057 (JP)
(72) Inventor: FUJIWARA, Kazuki, Kadoma-shi, Osaka 571-0057 (JP); KUMAZAWA, Seiji, Kadoma-shi, Osaka 571-0057 (JP); TSURUDOME, Naoyuki, Kadoma-shi, Osaka 571-0057 (JP); HIROSE, Takayuki, Kadoma-shi, Osaka 571-0057 (JP)
(74) Representative: Novagraaf International SA
(86) International application number: PCT/JP2024/030076
(87) International publication number: WO 2025/062946

(57) **Abstract**

A disclosed power storage device manufacturing method includes: a preparation step of preparing a case 11 having an opening and a sealing plate 12; a positioning step of positioning the sealing plate 12 to close the opening of the case 11; and a welding step of forming an annular primary beam and at least one annular higher-order light beam using a light splitting means, and welding the case 11 and the sealing plate 12 at an annular weld W using the primary light beam. In the welding step, at least one annular melt mark AM having a shape along the annular weld W is formed on either or both the case 11 and the sealing plate 12 by the higher-order light beam.

Thus, a power storage device with excellent welding quality can be provided.

## Description

### [Technical Field]

The present invention relates to a power storage device manufacturing method and a power storage device.

### [Background Art]

Conventionally, sealed power storage devices including a case and a sealing plate have been known (e.g., Patent Literature 1). The power storage device of Patent Literature 1 (specifically, a sealed battery) includes a case with an opening that houses an electrode group, and a sealing plate provided at the opening of the case, wherein the fitting part between the case and the sealing plate is welded using laser light, thereby sealing the interior of the case.

### [Citation List]

### [Patent Literature]

[Patent Literature 1] Japanese Laid-Open Patent Publication No. 2011-212711

### [Summary of Invention]

### [Technical Problem]

However, in the manufacturing method of the power storage device in Patent Literature 1, the welding is performed by scanning the laser light along the fitting part between the case and the sealing plate. In such a method of laser light scanning, there is a risk that welding quality cannot be sufficiently ensured in welding curved parts and the like. Under the circumstances such as above, one of the objects of the present disclosure is to provide a power storage device with excellent welding quality.

### [Solution to Problem]

One aspect of the present disclosure relates to a power storage device manufacturing method. The manufacturing method includes: a preparation step of preparing a case having an opening and a sealing plate; a positioning step of positioning the sealing plate to close the opening of the case; and a welding step of forming a primary light beam and at least one higher-order light beam using a light branching means, and welding the case and the sealing plate at an annular weld using the primary light beam, the primary light beam and the higher-order light beam each having an annular shape, wherein in the welding step, at least one annular melt mark having a shape along the annular weld is formed on either or both the case and the sealing plate by the higher-order light beam.

Another aspect of the present disclosure relates to a power storage device. The power storage device includes: a case having an opening; and a sealing plate that seals the opening and that is connected to the case at an annular weld, wherein either or both the case and the sealing plate have at least one annular melt mark having a shape along the annular weld.

### [Advantageous Effects of Invention]

According to the present disclosure, a power storage device with excellent welding quality can be provided.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic perspective view of an example of a power storage device according to the present disclosure.
[FIG. 2] FIG. 2 is a conceptual top view of a case and a sealing plate.
[FIG. 3] FIG. 3 includes conceptual diagrams of the four corners of an annular melt mark, wherein FIG. 3(a) illustrates the case where they have been formed properly, and FIGS. 3(b) and 3(c) illustrate examples where they have been formed improperly.

### [Description of Embodiments]

Embodiments of a power storage device manufacturing method and a power storage device according to the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained.

### (Power Storage Device Manufacturing Method)

The power storage device manufacturing method according to the present disclosure includes a preparation step, a positioning step, and a welding step. The power storage device may be a battery or a capacitor.

In the preparation step, a case having an opening and a sealing plate are prepared. The case may be made of a metal of which main component is iron, for example. The case may be formed in a bottomed tubular shape (e.g., a bottomed polygonal tubular shape or a bottomed cylindrical shape). The sealing plate may be made of a metal of which main component is iron, for example. The sealing plate may have a shape corresponding to the opening of the case. The constituent material of the case and the constituent material of the sealing plate may be the same as or different from each other.

In the positioning step, the sealing plate is positioned to close the opening of the case. Here, the boundary formed between the opening edge of the case and the outer periphery of the sealing plate may be referred to below as a "boundary part".

In the welding step, a primary light beam and at least one higher-order light beam each having an annular shape are formed using a light branching means, and the case and the sealing plate are welded at an annular weld using the primary light beam. The light branching means may be a diffractive optical element or a liquid crystal on silicon (LCOS). The annular primary light beam may be irradiated to the boundary part or its vicinity, thereby forming an annular weld at the boundary part. As a result of the welding of the case and the sealing plate being performed in a single operation using the annular primary light beam in the welding step, the welding quality can be sufficiently enhanced regardless of the shape of the annular weld. Furthermore, since the welding is performed in a single operation, the time required for the welding is very short, reducing the manufacturing cost of the power storage device.

Furthermore, in the welding step, at least one annular melt mark having a shape along the annular weld is formed on either or both the case and the sealing plate by the higher-order light beam. The heat imparted during the formation of the annular melt mark is transmitted to the boundary part to promote and stabilize the welding of the annular weld. Therefore, the output power of the primary light beam can be set lower than that in the case where the higher-order light beam is not used, thereby achieving further reduction in the manufacturing cost and stable annular weld formation by utilizing the heat input by the higher-order light beam.

In the welding step, the annular melt mark may be formed within the heat-affected zone around the annular weld. The number of annular melt marks formed within the heat-affected zone is not particularly limited. When multiple annular melt marks are formed, at least one of them needs to be formed within the heat-affected zone. According to the above configuration, as a result of the annular melt mark being formed within the heat-affected zone, that is, in close proximity to the annular weld, the heat input by the higher-order light beam for the annular melt mark can be effectively utilized for promotion of the annular weld formation. Thus, a power storage device with more excellent welding quality can be provided.

The power storage device manufacturing method may further include a first evaluation step of alternatively evaluating the state of the annular weld by evaluating the state of the annular melt mark. The state of the annular melt mark may include the darkness of the annular melt mark. The state of the annular weld may include its bonding strength or the presence or absence of defects. The annular melt mark by the higher-order light beam is formed simultaneously with the annular weld by the primary light beam, and both are derived from the same laser light. Therefore, by evaluating the state of the annular melt mark, the state of the annular weld can be alternatively (or indirectly) evaluated. For example, if the annular melt mark is extremely pale, it can be evaluated that the bonding strength of the annular weld is insufficient due to insufficient laser output power.

In the welding step, a spot melt mark may be formed on the sealing plate by a zero-order light beam produced by the light branching means. The power storage device manufacturing method may further include a second evaluation step of alternatively evaluating the state of the annular weld by evaluating the state of the spot melt mark. The state of the spot melt mark may include its diameter when the spot melt mark is circular, the shape of the spot melt mark, or the presence or absence of the spot melt mark. The spot melt mark is formed simultaneously with the annular weld, and both are derived from the same laser light. Therefore, by evaluating the state of the spot melt mark, the state of the annular weld can be alternatively (or indirectly) evaluated. For example, if the diameter of the spot melt mark is extremely small, it can be evaluated that the bonding strength of the annular weld is insufficient due to insufficient laser output power.

### (Power Storage Device)

The power storage device according to the present disclosure may be a battery or a capacitor. Examples of the battery include primary batteries such as lithium primary batteries, and secondary batteries such as alkaline storage batteries (e.g., nickel-metal hydride batteries and nickel-cadmium batteries), lithium-ion secondary batteries, and lithium-metal secondary batteries. The power storage device according to the present disclosure includes a case and a sealing plate.

The case has an opening. The case may be made of a metal of which main component is iron, for example. The case may be formed in a bottomed tubular shape (e.g., a bottomed polygonal tubular shape or a bottomed cylindrical shape). The case may house an electrode group including a positive electrode and a negative electrode, and an electrolyte.

The electrode group may be a wound electrode group in which the positive electrode and the negative electrode are wound with a separator therebetween. The outer shape of the electrode group may be, for example, a polygonal columnar shape or a solid cylindrical shape.

The positive electrode may include a positive electrode current collector having an elongated sheet shape (or a band shape) and a positive electrode active material layer formed on the surface of the positive electrode current collector. When the power storage device is a lithium-ion secondary battery, the positive electrode current collector may be formed of an aluminum foil or an aluminum alloy foil, and the positive electrode active material layer may contain a positive electrode active material (e.g., a lithium-containing transition metal oxide), a conductive agent, and a binder.

The negative electrode may include a negative electrode current collector having an elongated sheet shape (or a band shape) and a negative electrode active material layer formed on the surface of the negative electrode current collector. When the power storage device is a lithium-ion secondary battery, the negative electrode current collector may be formed of a copper foil or a copper alloy foil, and the negative electrode active material layer may contain a negative electrode active material (e.g., a carbonaceous material or a silicon-containing material), a conductive agent, and a binder. It should be noted that the negative electrode active material layer may not be provided.

The separator may be formed of a porous sheet having ion permeability and insulating properties. Examples of the porous sheet include thin films with micropores, woven fabrics, and nonwoven fabrics.

The sealing plate is connected to the case at the annular weld and seals the opening of the case. The sealing plate may be formed of a metal of which main component is iron, for example. The sealing plate may have a shape corresponding to the opening of the case. The constituent material of the sealing plate may be the same as or different from the constituent material of the case.

Either or both the case and the sealing plate have at least one annular melt mark having a shape along the annular weld. When the annular weld and the annular melt mark are formed simultaneously each in a single operation, using a light branching means, it is possible to provide a power storage device with high welding quality and reduce the manufacturing cost of the power storage device, similarly to what was stated above.

The annular melt mark may be formed within the heat-affected zone around the annular weld. According to the above configuration, the heat input for the annular melt mark can be effectively utilized for promotion of the annular weld formation, thereby further enhancing the welding quality of the power storage device.

According to the present disclosure, as a result of the annular weld being formed in a single operation, a power storage device with excellent welding quality can be provided. Furthermore, according to the present disclosure, the manufacturing cost of the power storage device can be reduced.

The following specifically describes examples of the power storage device manufacturing method and the power storage device according to the present disclosure with reference to the drawings. The steps and the elements of configuration described above can be applied to the steps and the elements of configuration of the power storage device manufacturing method and the power storage device in the examples described below. The steps and the elements of configuration of the power storage device manufacturing method and the power storage device in the examples described below can be altered based on the above description. Also, the matters described below may be applied to the above embodiments. Among the steps and the elements of configuration of the power storage device manufacturing method and the power storage device in the examples described below, a step or an element of configuration that is not essential to the steps or the elements of configuration of the power storage device manufacturing method and the power storage device according to the present disclosure may be omitted. It should be noted that the drawings indicated below are schematic and do not accurately reflect the shapes or numbers of actual members.

In the following, a power storage device 10 of the present embodiment is described first, and the power storage device manufacturing method of the present embodiment is described then.

### (Power Storage Device)

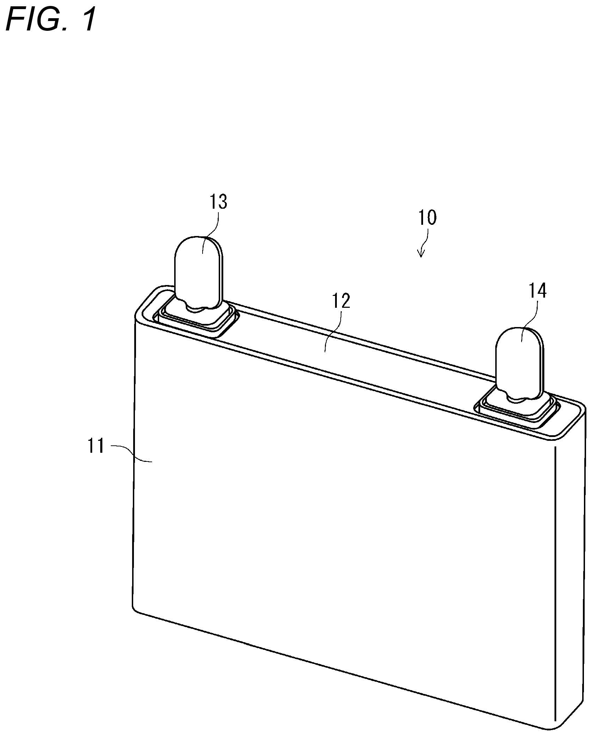

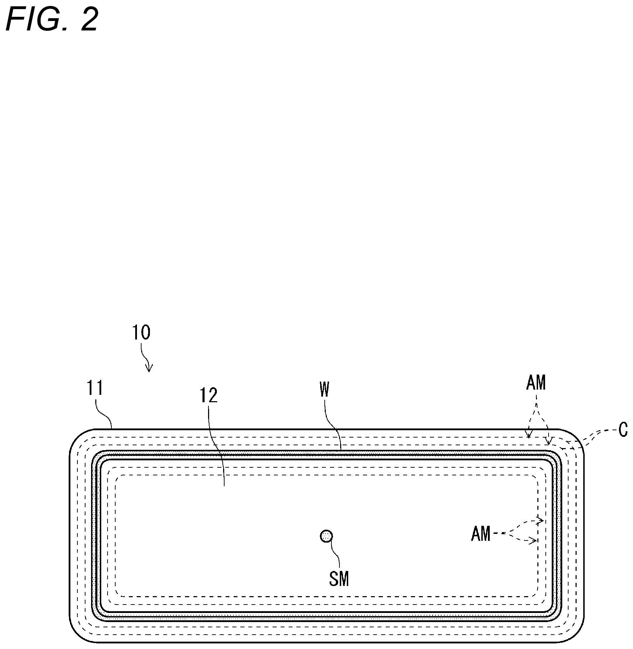

The power storage device 10 of the present embodiment is configured as a lithium-ion secondary battery, but is not limited thereto. As illustrated in FIGS. 1 and 2, the power storage device 10 includes a case 11 and a sealing plate 12.

The case 11 is formed in a bottomed polygonal tubular shape having an opening at one end. The case 11 houses an electrode group and a nonaqueous electrolyte, neither of which is illustrated. The case 11 is made of a metal. The electrode group is a wound electrode group in which a positive electrode and a negative electrode are wound with a separator therebetween.

The sealing plate 12 is connected to the case 11 at an annular weld W and seals the opening of the case 11. The sealing plate 12 is made of a metal and is formed in a polygonal plate shape that fits to the opening of the case 11. The annular weld W is formed along the outer periphery of the sealing plate 12. To the sealing plate 12, a positive electrode terminal 13 electrically connected to the positive electrode of the electrode group and a negative electrode terminal 14 electrically connected to the negative electrode of the electrode group are fixed via respective insulating members.

The case 11 and the sealing plate 12 have a plurality of (in this example, four) annular melt marks AM (indicated by dashed lines in FIG. 2) having a shape along the annular weld W. Preferably, these annular melt marks AM are formed within the heat-affected zone (not illustrated) around the annular weld W. The sealing plate 12 has a spot melt mark SM at its center, but the position of the spot melt mark SM is not particularly limited.

### (Power Storage Device Manufacturing Method)

The power storage device manufacturing method of the present embodiment is described next. By the power storage device manufacturing method of the present embodiment, not only the power storage device 10 of the present embodiment described above but also other types of power storage devices can of course be manufactured. The power storage device manufacturing method includes a preparation step, a positioning step, a welding step, a first evaluation step, and a second evaluation step.

In the preparation step, a case 11 having an opening and a sealing plate 12 having a shape corresponding to the opening are prepared. In the present embodiment, the case 11 is formed in a bottomed polygonal tubular shape, and the sealing plate 12 is formed in a polygonal plate shape.

In the positioning step, the sealing plate 12 is positioned to cover the opening of the case 11. In doing so, a boundary part is formed between the opening edge of the case 11 and the outer periphery of the sealing plate 12.

In the welding step, an annular primary light beam and annular higher-order light beams are formed using a non-illustrated light branching means (e.g., a diffractive optical element), and the case 11 and the sealing plate 12 are welded at an annular weld W using the primary light beam. The annular primary light beam has a shape along the boundary part and is irradiated to the boundary part. Additionally, in the welding step, a plurality of (in this example, four) annular melt marks AM having a shape along the annular weld W are formed on the case 11 and the sealing plate 12 by the higher-order light beams. In doing so, it is preferable to form the annular melt marks AM within the heat-affected zone (not illustrated) around the annular weld W. Furthermore, in the welding step, a spot melt mark SM is formed at the center of the sealing plate 12 by a zero-order light beam produced by the light branching means.

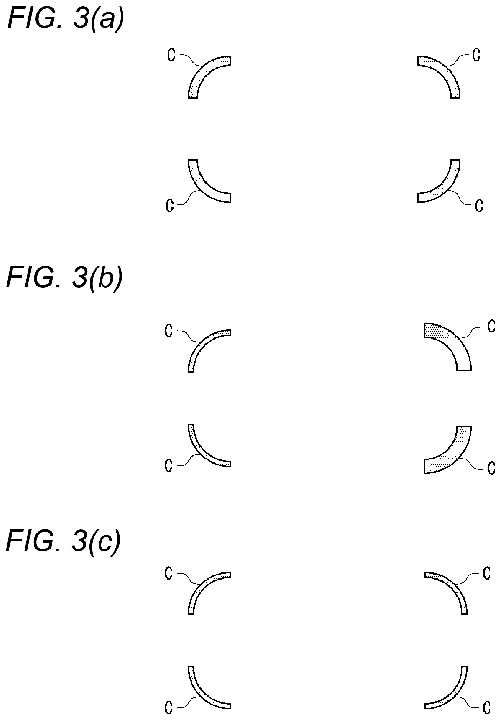

In the first evaluation step, the state of the annular weld W is alternatively evaluated by evaluating the state of the annular melt marks AM. Several specific examples of the evaluation are presented with reference to FIG. 3. In FIG. 3, four corners C of one of the annular melt marks AM are extracted and schematically illustrated. In the first evaluation step, the state of the annular weld W is alternatively evaluated by evaluating the state of these four corners C. The corners C may be curved to project outward as illustrated in FIG. 3. Alternatively or additionally, in the first evaluation step, the state of the annular weld W may be alternatively evaluated by evaluating the state of the four straight parts connecting the four corners C.

FIG. 3(a) illustrates the case where the four corners C are formed properly, with all of them being formed symmetrically with each other within a predetermined tolerance thickness range. FIG. 3(b) illustrates an example where the four corners C are formed improperly, with the two right corners C in the drawing being formed excessively thick and the two left corners C in the drawing being formed excessively thin. From the state illustrated in FIG. 3(b), it is inferred that the case 11 and the sealing plate 12 had been tilted during the formation of the annular melt marks AM (specifically, they had been tilted such that the left region in FIG. 3(b) had been positioned further away from the beam source than the beam focal point and the right region in the drawing had been positioned closer to the beam source than the beam focal point). It can be accordingly determined that the annular weld W formed simultaneously with the annular melt marks AM has also been formed improperly. FIG. 3(c) illustrates another example where the four corners C are formed improperly, with all of them being formed excessively thin. From the state illustrated in FIG. 3(c), it is inferred that the laser output power for forming the annular melt marks AM was insufficient. It can be accordingly determined that the annular weld W formed simultaneously with the annular melt marks AM has also been formed improperly.

In the second evaluation step, the state of the annular weld W is alternatively evaluated by evaluating the state of the spot melt mark SM. Several specific examples of this evaluation are presented. First, if the diameter of the spot melt mark SM falls within a predetermined tolerance range, it can be determined that the annular weld W has been formed properly. Next, if the diameter of the spot melt mark SM exceeds the tolerance range, it can be determined that the annular weld W has been formed improperly due to excessive laser output power or displacement of the focal point. If the diameter of the spot melt mark SM is below the tolerance range by contrast, it can be determined that the annular weld W has been formed improperly due to insufficient laser output power. Alternatively, if there is an abnormality in the shape of the spot melt mark SM, such as a case where a part is missing from the original circular shape, it can be determined that the annular weld W has been formed improperly due to an abnormal laser profile. Lastly, if the spot melt mark SM is absent, it can be determined that the annular weld W has not been formed due to the lack of laser irradiation.

### <<Supplemental Note>>

According to the above description of the embodiments, the following techniques are disclosed.

### (Technique 1)

A power storage device manufacturing method including:
a preparation step of preparing a case having an opening and a sealing plate;
a positioning step of positioning the sealing plate to close the opening of the case; and
a welding step of forming a primary light beam and at least one higher-order light beam using a light branching means, and welding the case and the sealing plate at an annular weld using the primary light beam, the primary light beam and the higher-order light beam each having an annular shape,
wherein in the welding step, at least one annular melt mark having a shape along the annular weld is formed on either or both the case and the sealing plate by the higher-order light beam.

### (Technique 2)

The power storage device manufacturing method according to Technique 1, wherein in the welding step, the annular melt mark is formed within a heat-affected zone around the annular weld.

### (Technique 3)

The power storage device manufacturing method according to Technique 1 or 2, further including a first evaluation step of alternatively evaluating a state of the annular weld by evaluating a state of the annular melt mark.

### (Technique 4)

The power storage device manufacturing method according to any one of Techniques 1 to 3, wherein in the welding step, a spot melt mark is formed on the sealing plate by a zero-order light beam produced by the light branching means, and
the method further comprises a second evaluation step of alternatively evaluating a state of the annular melt by evaluating a state of the spot melt mark.

### (Technique 5)

A power storage device including:
a case having an opening; and
a sealing plate that seals the opening and that is connected to the case at an annular weld,
wherein either or both the case and the sealing plate have at least one annular melt mark having a shape along the annular weld.

### (Technique 6)

The power storage device according to Technique 5, wherein the annular melt mark is formed within a heat-affected zone around the annular weld.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure can be used in power storage device manufacturing methods and power storage devices.

### [Reference Signs List]

10: power storage device
   11: case
   12: sealing plate
   13: positive electrode terminal
   14: negative electrode terminal
AM: annular melt mark
   C: corner
SM: spot melt mark
W: annular weld

## Claims

1. A power storage device manufacturing method comprising:
a preparation step of preparing a case having an opening and a sealing plate;
a positioning step of positioning the sealing plate to close the opening of the case; and
a welding step of forming a primary light beam and at least one higher-order light beam using a light branching means, and welding the case and the sealing plate at an annular weld using the primary light beam, the primary light beam and the higher-order light beam each having an annular shape,
wherein in the welding step, at least one annular melt mark having a shape along the annular weld is formed on either or both the case and the sealing plate by the higher-order light beam.

2. The power storage device manufacturing method according to claim 1,
wherein in the welding step, the annular melt mark is formed within a heat-affected zone around the annular weld.

3. The power storage device manufacturing method according to claim 1 or 2, further comprising
a first evaluation step of alternatively evaluating a state of the annular weld by evaluating a state of the annular melt mark.

4. The power storage device manufacturing method according to claim 1 or 2,
wherein in the welding step, a spot melt mark is formed on the sealing plate by a zero-order light beam produced by the light branching means, and
the method further comprises a second evaluation step of alternatively evaluating a state of the annular melt by evaluating a state of the spot melt mark.

5. A power storage device comprising:
a case having an opening; and
a sealing plate that seals the opening and that is connected to the case at an annular weld,
wherein either or both the case and the sealing plate have at least one annular melt mark having a shape along the annular weld.

6. The power storage device according to claim 5,
wherein the annular melt mark is formed within a heat-affected zone around the annular weld.
